# EUROPÄISCHE PATENTSCHRIFT

(11) **EP 2 596 040 B1**
(45) Veröffentlichungstag und Bekanntmachung des Hinweises auf die Patenterteilung: **11.06.2014**
(21) Anmeldenummer: 11731404.7
(22) Anmeldetag: 15.07.2011
(51) Int. Cl.: C08G 18/38, C08G 18/42, C08G 18/72, C08G 18/76, C08G 18/78, C08G 18/79, G02B 1/04

(54) **POLYURETHANE MIT GERINGEM VOLUMENSCHRUMPF**
POLYURETHANE HAVING LOW VOLUME SHRINKAGE
POLYURÉTHANES À RETRAIT VOLUMIQUE FAIBLE

(30) Priorität: 20.07.2010 DE 102010031681
(43) Veröffentlichungstag der Anmeldung: 29.05.2013
(73) Patentinhaber: Bayer Intellectual Property GmbH, 40789 Monheim (DE)
(72) Erfinder: LAAS, Hans-Josef, 51519 Odenthal (DE); GRESZTA-FRANZ, Dorota, 42659 Solingen (DE); HALPAAP, Reinhard, 51519 Odenthal (DE); MAGER, Dieter, 51373 Leverkusen (DE); MEIER-WESTHUES, Hans-Ulrich, 51379 Leverkusen (DE)
(74) Vertreter: BIP Patents
(86) Internationale Anmeldenummer: PCT/EP2011/062176
(87) Internationale Veröffentlichungsnummer: WO 2012/010524

(56) Entgegenhaltungen:
- EP-A1- 1 813 639
- WO-A1-2008/084054
- US-A- 4 680 369

## Beschreibung

Die Herstellung lichtechter und wetterbeständiger Kunststoffe durch Umsetzung von aliphatischen bzw. cycloaliphatischen Polyisocyanaten mit Verbindungen, die acide Wasserstoffatome enthalten, ist bekannt. In Abhängigkeit von der Art der H-aciden Reaktionspartner, wie z. B. Polyolen, Polyaminen und/oder Polythiolen, entstehen hierbei Polyadditionsprodukte mit beispielsweise Urethan-, Harnstoff- und/oder Thiourethanstrukturen.

Synonym für die Vielzahl unterschiedlicher Polymere, die sich aus Polyisocyanaten und H-aciden Verbindungen herstellen lassen, wird im Folgenden auch der allgemeine Begriff "Polyurethane" verwendet.

Für verschiedene Anwendungen, beispielsweise als leichtgewichtiger Ersatz für mineralisches Glas zur Herstellung von Scheiben für Automobil- und Flugzeugbau oder als Vergussmassen für optische, elektronische oder optoelektronische Bauteile, ist heute im Markt ein zunehmendes Interesse an transparenten, lichtechten Polyurethanmassen zu verzeichnen.

Insbesondere für hochwertige optische Anwendungen, wie z. B. für Linsen oder Brillengläser, besteht allgemein der Wunsch nach Kunststoffmaterialien, die eine hohe Lichtbrechung und gleichzeitig eine geringe Dispersion (hohe Abbe-Zahl) aufweisen.

Die Herstellung von transparenten Polyurethanmassen mit hohem Brechungsindex wurde bereits vielfach beschrieben. In der Regel kommen dabei als Polyisocyanatkomponenten sogenannte araliphatische Diisocyanate zum Einsatz, d. h. solche Diisocyanate, deren Isocyanatgruppen über aliphatische Reste an einem aromatischen System gebunden vorliegen. Aufgrund ihrer aromatischen Strukturen ergeben araliphatische Diisocyanate Polyurethane, die einen erhöhten Brechungsindex aufweisen, gleichzeitig garantieren die aliphatisch gebundenen Isocyanatgruppen die für hochwertige Anwendungen benötigte Lichtechtheit und geringe Vergilbungsneigung.

US-A 4680369 und US-A 4689387 beschreiben beispielsweise als Linsenmaterialien geeignete Polyurethane bzw. Polythiourethane, bei deren Herstellung zur Erzielung besonders hoher Brechungsindices spezielle Schwefel enthaltende Polyole bzw. mercaptofunktionelle aliphatische Verbindungen mit monomeren araliphatischen Diisocyanaten, wie z. B. 1,3-Bis(isocyanato-methyl)benzol (m-Xylylendiisocyanat, m-XDI), 1,4-Bis(isocyanatomethyl)benzol (p-Xylylendiiso-cyanat, p-XDI), 1,3-Bis(2-isocyanatopropan-2-yl)benzol (m-Tetramethylxylylendiisocyanat, m-TMXDI) oder 1,3-Bis(isocyanatomethyl)-2,4,5,6-tetrachlorbenzol kombiniert werden.

Monomere araliphatische Diisocyanate, wie m- und p-XDI oder m-TMXDI, werden auch in einer Vielzahl weiterer Veröffentlichungen, wie z. B. der EP-A 0 235 743, EP-A 0 268 896, EP-A 0 271 1 839, EP-A 0 408 459, EP-A 0 506 315, EP-A 0 586 091 und EP-A 0 803 743, als die bevorzugten Polyisocyanatkomponente zur Herstellung hochbrechender Linsenmaterialien genannt. Sie dienen dabei als Vernetzerkomponenten für Polyole und/oder Polythiole und ergeben in Abhängigkeit vom Reaktionspartner transparente Kunststoffe mit hohen Brechungsindices im Bereich von 1,56 bis 1,67 und vergleichsweise hohen Abbe-Zahlen bis zu 45.

Ein wesentlicher Nachteil der genannten Verfahren zur Herstellung hoch lichtbrechender Polyurethane für optische Anwendungen ist aber, dass während ihrer Aushärtung ein zum Teil erheblicher Volumenschrumpf auftritt, was insbesondere beim Giessen von Bauelementen, beispielsweise bei der Fertigung optischer Linsen definierter Geometrie, Probleme aufwerfen kann.

Aufgabe der vorliegenden Erfindung war es daher, neue Polyurethanmassen zur Verfügung zu stellen, die unter deutlich geringerer Volumenkontraktion zu hochtransparenten, licht- und wetterbeständigen Formkörpern mit hoher Lichtbrechung und geringer Dispersion ausreagieren und sich somit insbesondere auch zur Produktion optischer Präzisionsteile eignen.

Diese Aufgabe konnte durch die Bereitstellung der nachfolgend näher beschriebenen Polyurethane gelöst werden.

Die nachfolgend näher beschriebene Erfindung beruht auf der überraschenden Beobachtung, dass sich lösemittelfreie Polyisocyanatgemische, bestehend aus anteilig modifizierten, beispielsweise anteilig trimerisierten oder biuretisierten araliphatischen Diisocyanaten, mit gegenüber Isocanatgruppen reaktiven Reaktionspartnern unter üblichen Bedingungen zu lichtechten, nicht vergilbenden Polyurethankörpern verarbeiten lassen, die mit deutlich geringerem Volumenschrumpf aushärten als die bisher bekannten Polyurethane auf Basis ausschließlich monomerer araliphatischer Diisocyanate und sich darüber hinaus auch durch eine nochmals erhöhte Lichtbrechung und gleichzeitig verbesserte mechanische Eigenschaften auszeichnen.

Gegenstand der vorliegenden Erfindung ist die Verwendung lösemittelfreier Polyisocyanatkomponenten A), die zu 5 bis 95 Gew.-% aus Polyisocyanatmolekülen, aufgebaut aus mindestens zwei araliphatischen Diisocyanatmolekülen, und zu 95 bis 5 Gew.-% aus monomeren araliphatischen Diisocyanaten bestehen und einen Gehalt an Isocyanatgruppen von 18 bis 43 Gew.-% aufweisen, zur Herstellung lichtechter kompakter oder geschäumter Polyurethankörper.

Gegenstand der Erfindung ist auch ein Verfahren zur Herstellung lichtechter Polyurethanmassen durch lösemittelfreie Umsetzung von
A) Polyisocyanatgemischen, die zu 5 bis 95 Gew.-% aus Polyisocyanaten, aufgebaut aus mindestens zwei araliphatischen Diisocyanatmolekülen, und zu 95 bis 5 Gew.-% aus monomeren araliphatischen Diisocyanaten bestehen und einen Gehalt an Isocyanatgruppen von 18 bis 43 Gew.-% aufweisen,
   mit
B) gegenüber Isocyanatgruppen reaktiven Reaktionspartnern einer mittleren Funktionalität von 2,0 bis 6,0 und gegebenenfalls unter Mitverwendung
C) weiterer Hilfs- und Zusatzmittel,
unter Einhaltung eines Äquivalentverhältnisses von Isocyanatgruppen zu gegenüber Isocyanaten reaktiven Gruppen von 0,5 : 1 bis 2,0 : 1.

Gegenstand der Erfindung sind schließlich auch die aus den so erhältlichen lichtechten Polyurethanmassen hergestellten transparenten kompakten oder geschäumten Formkörper.

Bei der beim erfindungsgemäßen Verfahren eingesetzten Komponente A) handelt es sich um lösemittelfreie, durch anteilige Modifizierung araliphatischer Diisocyanate zugängliche Polyisocyanatgemische, die zu 5 bis 95 Gew.-% aus Polyisocyanatmolekülen, aufgebaut aus mindestens zwei araliphatischen Diisocyanatmolekülen, und zu 95 bis 5 Gew.-% aus monomeren araliphatischen Diisocyanaten bestehen und einen Gehalt an Isocyanatgruppen von 18 bis 43 Gew.-% aufweisen.

Geeignete araliphatische Diisocyanate zur Herstellung der Polyisocyanatkomponenten A) sind beliebige durch Phosgenierung oder nach phosgenfreien Verfahren, beispielsweise durch thermische Urethanspaltung, zugängliche Diisocyanate, deren Isocyanatgruppen über gegebenenfalls verzweigte aliphatische Reste an einem gegebenenfalls weiter substituierten Aromaten gebunden vorliegen, wie z. B. 1,3-Bis(isocyanatomethyl)benzol (m-Xylylendiisocyanat, m-XDI), 1,4-Bis(isocyanatomethyl)benzol (p-Xylylendiisocyanat, p-XDI), 1,3-Bis(2-isocyanato-propan-2-yl)benzol (m-Tetramethylxylylendiisocyanat, m-TMXDI), 1,4-Bis(2-isocyanatopropan-2-yl)benzol (p-Tetramethylxylylendiisocyanat, p-TMXDI), 1,3-Bis(isocyanatomethyl)-4-methylbenzol, 1,3-Bis(isocyanatomethyl)-4-ethylbenzol, 1,3-Bis(isocyanatomethyl)-5-methylbenzol, 1,3-Bis(isocyanatomethyl)-4,5-dimethylbenzol, 1,4-Bis(isocyanatomethyl)-2,5-dimethylbenzol, 1,4-Bis(isocyanatomethyl)-2,3,5,6-tetramethylbenzol, 1,3-Bis(isocyanatomethyl)-5-tert.-butylbenzol, 1,3-Bis(isocyanatomethyl)-4-chlorbenzol, 1,3-Bis(isocyanatomethyl)-4,5-dichlorbenzol, 1,3-Bis-(isocyanatomethyl)-2,4,5,6-tetrachlorbenzol, 1,4-Bis(isocyanatomethyl)-2,3,5,6-tetrachlorbenzol, 1,4-Bis(isocyanatomethyl)-2,3,5,6-tetrabrombenzol, 1,4-Bis(2-isocyanatoethyl)benzol, 1,4-Bis(iso-cyanatomethyl)naphthalin sowie beliebige Mischungen dieser Diisocyanate.

Die Herstellung der Polyisocyanatkomponenten A) aus den genannten araliphatischen Diisocyanaten erfolgt mit Hilfe an sich bekannter Modifizierungsreaktionen durch Umsetzung eines Teils der ursprünglich im Ausgangsdiisocyanat vorhandenen Isocyanatgruppen unter Bildung von Polyisocyanatmolekülen, die aus mindestens zwei Disocyanatmolekülen bestehen, und ist nicht Gegenstand der vorliegenden Anmeldung.

Geeignete derartige Modifizierungsreaktionen sind beispielsweise die üblichen Verfahren zur katalytischen Oligomerisierung von Isocyanaten unter Bildung von Uretdion-, Isocyanurat-, Iminooxadiazindion- und/oder Oxadiazintrionstrukturen oder zur Biuretisierung von Diisocyanaten, wie sie z. B. in Laas et al., J. Prakt. Chem. 336, 1994, 185-200*,* in DE-A 1 670 666 und EP-A 0 798 299 beispielhaft beschrieben sind. Konkrete Beschreibungen solcher Polyisocyanate auf Basis araliphatischer Diisocyanate finden sich z. B. auch in EP-A 0 081 713, EP-A 0 197 543, GB-A 1 034 152 und JP-A 05286978.

Geeignete Modifizierungsreaktionen zur Herstellung der Polyisocyanatkomponenten A) sind aber auch die Urethanisierung und/oder Allophanatisierung araliphatischer Diisocyanate nach Zusatz molar unterschüssiger Mengen hydroxyfunktioneller Reaktionspartner, insbesondere niedermolekularer ein- oder mehrwertiger Alkohole des Molekulargewichtsbereiches 32 bis 300, wie z. B. Methanol, Ethanol, n-Propanol, Isopropanol, n-Butanol, Isobutanol, sec-Butanol, die isomeren Pentanole, Hexanole, Octanole und Nonanole, n-Decanol, n-Dodecanol, n-Tetradecanol, n-Hexadecanol, n-Octadecanol, Cyclohexanol, die isomeren Methylcyclohexanole, Hydroxymethylcyclohexan, 3-Methyl-3-hydroxymethyloxetan, 1,2-Ethandiol, 1,2- und 1,3-Propandiol, die isomeren Butandiole, Pentandiole, Hexandiole, Heptandiole und Octandiole, 1,2- und 1,4-Cyclo-hexandiol, 1,4-Cyclohexandimethanol, 4,4'-(1-Methylethyliden)-biscyclohexanol, Diethylenglylol, Dipropylenglykol, 1,2,3-Propantriol, 1,1,1-Trimethylolethan, 1,2,6-Hexantriol, 1,1,1-Trimethylolpropan, 2,2-Bis(hydroxymethyl)-1,3-propandiol oder 1,3,5-Tris(2-hydroxyethyl)-isocyanurat, oder beliebiger Gemische solcher Alkohole. Bevorzugte Alkohole zur Herstellung Urethan- und/oder Allophanat-modifizierter Polyisocyanatkomponenten A) sind die genannten Monoalkohole und Diole mit 2 bis 8 Kohlenstoffatomen.

Konkrete Beschreibungen Urethan- und/oder Allophanat-modifizierter Polyisocyanate auf Basis araliphatischer Diisocyanate finden sich beispielsweise in EP-A 1 437 371, EP-A 1 443 067, JP-A 200516161691, JP-A 2005162271.

Unabhängig von der Art der eingesetzten araliphatischen Diisocyanate und der gewählten Modifizierungsreaktion, wird bei der Herstellung der erfindungsgemäß eingesetzten Polyisocyanatkomponenten A), anders als beispielsweise bei der Herstellung von Lackpolyisocyanaten üblich und in der vorstehend zitierten Patentliteratur beschrieben, nach erfolgter Modifizierung auf die Abtrennung des nicht umgesetzten monomeren Diisocyanatüberschusses verzichtet. Auf diese Weise erhält man klare, praktisch farblose, Uretdion-, Isocyanurat-, Iminooxadiazindion-, Urethan- , Allophanat-, Biuret- und/oder Oxadiazintriongruppen enthaltende Polyisocyanatgemische auf Basis araliphatischer Diisocyanate, die vorzugsweise zu 20 bis 80 Gew.-%, besonders bevorzugt zu 35 bis 65 Gew.-% aus Polyisocyanatmolekülen, die aus mindestens zwei araliphatischen Diisocyanatmolekülen aufgebaut sind, und vorzugsweise zu 80 bis 20 Gew.-%, besonders bevorzugt zu 65 bis 35 Gew.-% aus monomeren araliphatischen Diisocyanaten bestehen und vorzugsweise einen Gehalt an Isocyanatgruppen von 20 bis 40 Gew.-%, besonders bevorzugt von 23 bis 36 Gew.-% aufweisen.

Ganz besonders bevorzugte Polyisocyanatkomponenten A) sind solche der vorstehend beschriebenen Art auf Basis von m-XDI, p-XDI und/oder m-TMXDI mit einem Gehalt an Isocyanatgruppen von 24 bis 35 Gew.-%, insbesondere solche, die Uretdion-, Isocyanurat-, Iminooxadiazindion-, Allophanat- und/oder Biuretgruppen enthalten.

Zur Herstellung der erfindungsgemäßen lichtechten Polyurethanmassen, werden die vorstehend beschriebenen Polyisocyanate A) mit beliebigen lösemittelfreien gegenüber Isocyanatgruppen reaktiven Reaktionspartnern B) umgesetzt, die eine im Sinne der Isocyanat-Additionsreaktion mittlere Funktionalität von 2,0 bis 6,0, vorzugsweise von 2,5 bis 4,0, besonders bevorzugt von 2,5 bis 3,5 aufweisen.

Hierbei handelt es sich insbesondere um die üblichen aus der Polyurethanchemie bekannten Polyetherpolyole, Polyesterpolyole, Polyetherpolyesterpolyole, Polythioetherpolyole, polymermodifizierte Polyetherpolyole, Pfropfpolyetherpolyole, insbesondere solche auf Styrol-und/oder Acrylnitrilbasis, Polyetherpolyamine, hydroxylgruppenhaltigen Polyacetale und/oder hydroxylgruppenhaltigen aliphatischen Polycarbonate, die üblicherweise ein Molekulargewicht von 106 bis 12000, vorzugsweise 250 bis 8000 aufweisen. Ein breiter Überblick über geeignete Reaktionspartner B) findet sich beispielsweise in N. Adam et al.: "Polyurethanes", Ullmann's Encyclopedia of Industrial Chemistry, Electronic Release, 7th ed., chap. 3.2 - 3.4, Wiley-VCH, Weinheim 2005*.*

Geeignete Polyetherpolyole B) sind beispielsweise solche der in der DE-A 2 622 951, Spalte 6, Zeile 65 - Spalte 7, Zeile 47, oder der EP-A 0 978 523 Seite 4, Zeile 45 bis Seite 5, Zeile 14 genannten Art, sofern sie den oben gemachten Angaben hinsichtlich Funktionalität und Molekulargewicht entsprechen. Besonders bevorzugte Polyetherpolyole B) sind Anlagerungsprodukte von Ethylenoxid und/oder Propylenoxid an Glycerin, Trimethylolpropan, Ethylendiamin und/oder Pentaerythrit.

Geeignete Polyesterpolyole B) sind beispielsweise solche der in der EP-A 0 978 523 Seite 5, Zeilen 17 bis 47 oder der EP-A 0 659 792 Seite 6, Zeilen 8 bis 19 genannten Art, sofern sie den oben gemachten Angaben entsprechen, bevorzugt solche, deren Hydroxylzahl von 20 bis 650 mg KOH/g beträgt.

Geeignete Polythiopolyole B) sind beispielsweise die bekannten Kondensationsprodukte von Thiodiglykol mit sich selbst oder anderen Glykolen, Dicarbonsäuren, Formaldehyd, Aminocarbonsäuren und/oder Aminoalkoholen. Je nach Art der eingesetzten Mischkomponenten handelt es sich bei diesen um Polythiomischetherpolyole, Polythioetheresterpolyole oder Polythioetheresteramidpolyole.

Als Komponente B) geeignete Polyacetalpolyole sind beispielsweise die bekannten Umsetzungsprodukte einfacher Glykole, wie z. B. Diethylenglykol, Triethylenglykol, 4,4'-Dioxethoxy-di-phenyl-dimethylmethan (Addukt von 2 mol Ethylenoxid an Bisphenol A) oder Hexandiol, mit Formaldehyd oder auch durch Polykondensation cyclischer Acetale, wie z. B. Trioxan, hergestellte Polyacetale.

Darüber hinaus sind als Komponente B) auch Aminopolyether oder Gemische von Aminopolyethern gut geeignet, d. h. Polyether mit gegenüber Isocyanatgruppen reaktionsfähigen Gruppen, die sich zumindest zu 50 Äquivalent-%, vorzugsweise zumindest zu 80 Äquivalent-%, aus primären und/oder sekundären, aromatisch oder aliphatisch gebundenen Aminogruppen und zum Rest aus primären und/oder sekundären, aliphatisch gebundenen Hydroxylgruppen zusammensetzen. Geeignete derartige Aminopolyether sind beispielsweise die in EP-A 0 081 701, Spalte 4, Zeile 26 bis Spalte 5, Zeile 40, genannten Verbindungen. Ebenfalls als Ausgangskomponente E) geeignet sind aminofunktionelle Polyetherurethane oder -harnstoffe, wie sie sich beispielsweise nach dem Verfahren der DE-A 2 948 419 durch Hydrolyse von isocyanatfunktionellen Polyetherprepolymeren herstellen lassen oder auch Aminogruppen aufweisende Polyester des obengenannten Molekulargewichtsbereichs.

Weitere geeignete gegenüber Isocyanatgruppen reaktive Komponenten B) sind beispielsweise auch die in EP-A 0 689 556 und EP-A 0 937 110 beschriebenen, z. B. durch Umsetzung epoxidierter Fettsäureester mit aliphatischen oder aromatischen Polyolen unter Epoxidringöffung erhältlichen speziellen Polyole.

Auch Hydroxylgruppen enthaltende Polybutadiene können können gegebenenfalls als Komponente B) eingesetzt werden.

Zur Herstellung von Polyurethanmassen ganz besonders hoher Lichtbrechung eignen sich als gegenüber Isocyanatgruppen reaktive Komponenten B) insbesondere auch Polythioverbindungen, beispielsweise einfache Alkanthiole, wie z. B. Methandithiol, 1,2-Ethandithiol, 1,1-Propandithiol, 1,2-Propandithiol, 1,3-Propandithiol, 2,2-Propandithiol, 1,4-Butandithiol, 2,3-Butandithiol, 1,5-Pentandithiol, 1,6-Hexandithiol, 1,2,3-Propantrithiol, 1,1-Cyclohexandithiol, 1,2-Cyclohexandithiol, 2,2-Dimethylpropan-1,3-dithiol, 3,4-Dimethoxybutan-1,2-dithiol und 2-Methylcyclohexan-2,3-dithiol, Thioethergruppen enthaltende Polythiole, wie z. B. 2,4-Dimercaptomethyl-1,5-dimercapto-3-thiapentan, 4-Mercaptomethyl-1,8-dimercapto-3,6-dithiaoctan, 4,8-Dimercapto-methyl-1,11-dimercapto-3,6,9-trithlaundecan, 4,7-Dimercaptomethyl-1, 11-dimercapto-3,6,9-trithia-undecan, 5,7-Dimercaptomethyl-1,11-dimercapto-3,6,9-trithlaundecan, 4,5-Bis(mercaptoethylthio)-1,10-dimercapto-3,8-dithiadecan, Tetrakis(mercaptomethyl)methan, 1,1,3,3-Tetrakis(mercapto-methylthio)propan, 1,1,5,5-Tetrakis(mercaptomethylthio)-3-thiapentan, 1,1,6,6-Tetrakis(mercapto-methylthio)-3,4-dithiahexan, 2-Mercaptoethylthio-1,3-dimercaptopropan, 2,3-Bis(mercapto-ethylthio)-1-mercaptopropan, 2,2-Bis(mercaptomethyl)-1,3-dimercaptopropan, Bis(mercaptomethyl)sulfid, Bis(mercaptomethyl)disulfid, Bis(mercaptoethyl)sulfid, Bis(mercaptoethyl)disulfid, Bis(mercaptopropyl)sulfid, Bis(mercaptopropyl)disulfid, Bis(mercaptomethylthio)methan, Tris(mercaptomethylthio)methan, Bis(mercaptoethylthio)methan, Tris(mercaptoethylthio)methan, Bis(mercaptopropylthio)methan, 1,2-Bis(mercaptomethylthio)ethan, 1,2-Bis(mercaptoethyl-thio)ethan, 2-Mercaptoethylthio)ethan, 1,3-Bis(mercaptomethylthio)propan, 1,3-Bis(mercapto-propylthio)propan, 1,2,3-Tris(mercaptomethylthio)propan, 1,2,3-Tris(mercaptoethylthio)propan, 1,2,3-Tris(mercaptopropylthio)propan, Tetrakis(mercaptomethylthio)methan, Tetrakis(mercapto-ethylthiomethyl)methan, Tetrakis(mercaptopropylthiomethyl)methan, 2,5-Dimercapto-1,4-dithian, 2,5-Bis(mercaptomethyl)-1,4-dithian und dessen gemäß JP-A 07118263 erhältliche Oligomere, 1,5-Bis(mercaptopropyl)-1,4-dithian, 1,5-Bis(2-mercaptoethylthiomethyl)-1,4-dithian, 2-Mercapto-methyl-6-mercapto-1,4-dithiacycloheptan, 2,4,6-Trimercapto-1,3,5-trithian, 2,4,6-Trimercapto-methyl-1,3,5-trithian und 2-(3-Bis(mercaptomethyl)-2-thiapropyl)-1,3-dithiolan, Polyesterthiole, wie z.B. Ethylenglycol-bis(2-mercaptoacetat), Ethylenglycol-bis(3-mercaptopropionat), Diethylenglycol(2-mercaptoacetat), Diethylenglycol(3-mercaptopropionat), 2,3-Dimercapto-1-propanol(3-mercaptopropionat), 3-Mercapto-1,2-propandiol-bis(2-mercaptoacetat), 3-Mercapto-1,2-propandiol-bis(3-mercaptopropionat), Trimethylolpropan-tris(2-mercaptoacetat), Trimethyl-olpropan-tris(3-mercaptopropionat), Trimethylolethan-tris(2-mercaptoacetat), Trimethylolethan-tris(3-mercaptopropionat), Pentaerythrit-tetrakis(2-mercaptoacetat), Pentaerythrit-tetrakis(3-mercaptopropionat), Glycerin-tris(2-mercaptoacetat), Glycerin-tris(3-mercaptopropionat), 1,4-Cyclohexandiol-bis(2-mercaptoacetat), 1,4-Cyclohexandiol-bis(3-mercaptopropionat), Hydroxy-methylsulfid-bis(2-mercaptoacetat), Hydroxymethylsulfid-bis(3-mercaptopropionat), Hydroxy-ethylsulfid(2-mercaptoacetat), Hydroxyethylsulfid(3-mercaptopropionat), Hydroxymethyldi-sulfid(2-mercaptoacetat), Hydroxymethyldisulfid(3-mercaptopropionat), (2-Mercaptoethyl-ester)thioglycolat und Bis(2-mercaptoethylester)thiodipropionat sowie aromatische Thioverbindungen, wie z. B. 1,2-Dimercaptobenzol, 1,3-Dimercaptobenzol, 1,4-Dimercaptobenzol, 1,2-Bis(mercaptomethyl)benzol, 1,4-Bis(mercaptomethyl)benzol, 1,2-Bis(mercaptoethyl)benzol, 1,4-Bis(mercaptoethyl)benzol, 1,2,3-Trimercaptobenzol, 1,2,4-Trimercaptobenzol, 1,3,5-Trimercapto-benzol, 1,2,3-Tris(mercaptomethyl)benzol, 1,2,4-Tris(mercaptomethyl)benzol, 1,3,5-Tris(mercaptomethyl)benzol, 1,2,3-Tris(mercaptoethyl)benzol, 1,3,5-Tris(mercaptoethyl)benzol, 1,2,4-Tris(mercaptoethyl)benzol, 2,5-Toluoldithiol, 3,4-Toluoldithiol, 1,4-Naphthalindithiol, 1,5-Naphthalindithiol, 2,6-Naphthalindithiol, 2,7-Naphthalindithiol, 1,2,3,4-Tetramercaptobenzol, 1,2,3,5-Tetramercaptobenzol, 1,2,4,5-Tetramercaptobenzol, 1,2,3,4-Tetrakis(mercaptomethyl)-benzol, 1,2,3,5-Tetrakis(mercaptomethyl)benzol, 1,2,4,5-Tetrakis(mercaptomethyl)benzol, 1,2,3,4-Tetrakis(mercaptoethyl), 1,2,3,5-Tetrakis(mercaptoethyl)benzol, 1,2,4,5-Tetrakis(mercapto-ethyl)benzol, 2,2'-Dimercaptobiphenyl und 4,4'-Dimercaptobiphenyl.

Bevorzugte Polythioverbindungen B) sind Polythioether- und Polyesterthiole der genannnten Art. Besonders bevorzugte Polythioverbindungen B) sind 4-Mercaptomethyl-1,8-dimercapto-3,6-dithiaoctan, 2,5-Bismercaptomethyl-1,4-dithian, 1,1,3,3-Tetrakis(mercaptomethylthio)propan, 5,7-Dimercaptomethyl-1,11-dimercapto-3,6,9-trithiaundecan, 4,7-Dimercaptomethyl-1,11-dimercapto-3,6,9-trithiaundecan, 4,8-Dimercaptomethyl-1,11-dimercapto-3,6,9-trithiaundecan, Trimethylol-propan-tris(3-mercaptopropionat), Trimethylolethan-tris(2-mercaptoacetat), Pentaerythrit-tetrakis-(2-mercaptoacetat) und Pentaerythrit-tetrakis(3-mercaptopropionat).

Darüber hinaus sind als gegenüber Isocyanatgruppen reaktive Komponenten B) auch Schwefel enthaltende Hydroxyverbindungen geeignet. Beispielhaft seien hier genannt einfache Mercaptoalkohole, wie z. B. 2-Mercaptoethanol, 3-Mercaptopropanol, 1,3-Dimercapto-2-propanol, 2,3-Dimercaptopropanol und Dithioerythritol, Thioetherstrukturen enthaltende Alkohole, wie z. B. Di(2-hydroxyethyl)sulfid, 1,2-Bis(2-hydroxyethylmercapto)ethan, Bis(2-hydroxyethyl)disulfid und 1,4-Dithian-2,5-diol, oder Schwefel enthaltende Diole mit Polyesterurethan-, Polythioesterurethan-, Polyesterthiourethan- oder Polythioesterthiourethanstruktur der in der EP-A 1 640 394 genannten Art.

Bei der Herstellung der erfindungsgemäßen lichtechten Polyurethanmassen können als gegenüber Isocyanaten reaktive Verbindungen B) auch niedermolekulare, hydroxy- und/oder aminofunktionelle Komponenten, d. h. solche eines Molekulargewichtsbereiches von 60 bis 500, vorzugsweise von 62 bis 400, zum Einsatz kommen.

Hierbei handelt es sich beispielsweise um einfache ein- oder mehrwertige Alkohole mit 2 bis 14, vorzugsweise 4 bis 10 Kohlenstoffatomen, wie z. B. 1,2-Ethandiol, 1,2- und 1,3-Propandiol, die isomeren Butandiole, Pentandiole, Hexandiole, Heptandiole und Octandiole, 1,10-Decandiol, 1,2-und 1,4-Cyclohexandiol, 1,4-Cyclohexandimethanol, 4,4'-(1-Methylethyliden)-biscyclohexanol, 1,2,3-Propantriol, 1,1,1-Trimethylolethan, 1,2,6-Hexantriol, 1,1,1-Trimethylolpropan, 2,2-Bis-(hydroxymethyl)-1,3-propandiol, Bis-(2-hydroxyethyl)-hydrochinon, 1,2,4- und 1,3,5-Trihydroxy-cyclohexan oder 1,3,5-Tris(2-hydroxyethyl)-isocyanurat.

Beispiele für geeignete niedermolekulare aminofunktionelle Verbindungen sind beispielsweise aliphatische und cycloaliphatische Amine und Aminoalkohole mit primär und/oder sekundär gebundenen Aminogruppen, wie z. B. Cyclohexylamin, 2-Methyl-1,5-pentandiamin, Diethanolamin, Monoethanolamin, Propylamin, Butylamin, Dibutylamin, Hexylamin, Monoisopropanolamin, Diisopropanolamin, Ethylendiamin, 1,3-Diaminopropan, 1,4-Diaminobutan, Isophorondiamin, Diethylentriamin, Ethanolamin, Aminoethylethanolamin, Diaminocyclohexan, Hexamethylendiamin, Methyliminobispropylamin, Iminobispropylamin, Bis(aminopropyl)piperazin, Aminoethylpiperazin, 1,2-Diaminocyclohexan, Triethylentetramin, Tetraethylenpentamin, 1,8-p-Diamino-menthan, Bis(4-aminocyclohexyl)methan, Bis(4-amino-3-methylcyclohexyl)methan, Bis(4-amino-3,5-dimethylcyclohexyl)methan, Bis(4-amino-2,3,5-trimethylcyclohexyl)methan, 1,1-Bis(4-amino-cyclohexyl)propan, 2,2-Bis(4-aminocyclohexyl)propan, 1,1-Bis(4-aminocyclohexyl)ethan, 1,1-Bis-(4-aminocyclohexyl)butan, 2,2-Bis(4-aminocyclohexyl)butan, 1,1-Bis(4-amino-3-methylcyclohexyl)ethan, 2,2-Bis(4-amino-3-methylcyclohexyl)propan, 1,1-Bis(4-amino-3,5-dimethylcyclo-hexyl)ethan, 2,2-Bis(4-amino-3,5-dimethylcyclohexyl)propan, 2,2-Bis(4-amino-3,5-dimethylcyclo-hexyl)butan, 2,4-Diaminodicyclohexylmethan, 4-Aminocyclohexyl-4-amino-3-methylcyclohexyl-methan, 4-Amino-3,5-dimethylcyclohexyl-4-amino-3-methylcyclohexylmethan und 2-(4-Amino-cyclohexyl)-2-(4-amino-3-methylcyclohexyl)methan.

Beispiele für aromatische Polyamine, insbesondere Diamine, mit Molekulargewichten unter 500, die geeignete gegenüber Isocyanaten reaktive Verbindungen B) darstellen, sind z. B. 1,2- und 1,4-Diaminobenzol, 2,4- und 2,6-Diaminotoluol, 2,4'- und/oder 4,4'-Diaminodiphenylmethan, 1,5-Diaminonaphthalin, 4,4',4"-Triaminotriphenylmethan, 4,4'-Bis-(methylamino)-diphenylmethan oder 1-Methyl-2-methylamino-4-aminobenzol. 1-Methyl-3,5-diethyl-2,4-diaminobenzol, 1-Methyl-3,5-diethyl-2,6-diaminobenzol, 1,3,5-Trimethyl-2,4-diaminobenzol, 1,3,5-Triethyl-2,4-diaminobenzol, 3,5,3',5'-Tetraethyl-4,4'-diaminodiphenylmethan, 3,5,3',5'-Tetraisopropyl-4,4'-diaminodiphenyl-methan, 3,5-Diethyl-3',5'-diisopropyl-4,4'-diaminodiphenylmethan, 3,3'-Diethyl-5,5'-diisopropyl-4,4'-diaminodiphenylmethan, 1-Methyl-2,6-diamino-3-isopropylbenzol, flüssige Gemische von Polyphenylpolymethylenpolyaminen, wie sie auf bekannte Weise durch Kondensation von Anilin mit Formaldehyd erhältlich sind, sowie beliebige Mischungen solcher Polyamine. In diesem Zusammenhang seien beispielsweise Mischungen von 1-Methyl-3,5-diethyl-2,4-diaminobenzol mit 1-Methyl-3,5-diethyl-2,6-diaminobenzol in einem Gewichtsverhältnis von 50 : 50 bis 85 : 15, vorzugsweise von 65 : 35 bis 80 : 20 besonders erwähnt.

Die Verwendung niedermolekularer aminofunktioneller Polyether mit Molekulargewichten unter 500 ist ebenfalls möglich. Hierbei handelt es sich beispielsweise um solche mit primären und/oder sekundären, aromatisch oder aliphatisch gebundenen Aminogruppen, deren Aminogruppen gegebenenfalls über Urethan- oder Estergruppen an die Polyetherketten angebunden sind und die nach bekannten, bereits oben zur Herstellung der höhermolekularen Aminopolyether beschriebenen Verfahren zugänglich sind.

Gegebenenfalls können auch sterisch gehinderte aliphatische Diamine mit zwei sekundär gebundenen Aminogruppen als gegenüber Isocyanatgruppen reaktive Komponenten B) eingesetzt werden, wie z. B. die aus EP-A 0 403 921 bekannten Umsetzungsprodukte aliphatischer und/oder cycloaliphatischer Diamine mit Maleinsäure- oder Fumarsäureestern, das gemäß der Lehre der EP-A 1 767 559 erhältliche Bisaddukt von Acrylnitril an Isophorondiamin oder die beispielsweise in der DE-A 19 701 835 beschriebenen Hydrierungsprodukte aus aliphatischen und/oder cycloaliphatischen Diaminen und Ketonen, wie z. B. Diisopropylketon, zugänglicher Schiffscher Basen.

Bevorzugte Reaktionspartner B) für die Polyisocyanatgemische A) sind die vorstehend genannten polymeren Polyetherpolylole, Polyesterpolyole und/oder Aminopolyether, die genannten Polythioverbindungen, niedermolekularen aliphatischen und cycloaliphatischen mehrwertigen Alkohole sowie die genannten niedermolekularen mehrwertigen Amine, insbesondere sterisch gehinderte aliphatische Diamine mit zwei sekundär gebundenen Aminogruppen.

Als Reaktionspartner für die Polyisocyanatgemische A) eignen sich auch beliebige Gemische der vorstehend beispielhaft genannten gegenüber Isocyanatgruppen reaktiven Komponenten B). Während unter Verwendung ausschließlich hydroxyfunktioneller Komponenten B) reine Polyurethanmassen, unter ausschließlicher Verwendung von Thioverbindungen B) reine Polythiourethane und unter ausschließlicher Verwendung von Polyaminen B) reine Polyharnstoffmassen erhalten werden, lassen sich unter Verwendung von Aminoalkoholen, Mercaptoalkoholen oder geeigneter Gemische von hydroxy-, mercapto- und aminofunktionellen Verbindungen als Komponente B) Polyadditionsverbindungen herstellen, in denen sich das Äquivalentverhältnis von Urethan- zu Thiourethan- und/oder Harnstoffgruppen beliebig einstellen lässt.

Die Polyisocyanatkomponenten A) kommen bei der Herstellung von lichtechten Polyurethanmassen in der Regel als alleinige Polyisocyanatkomponente zum Einsatz. Grundsätzlich ist es jedoch auch möglich, die Polyisocyanatkomponenten A) in Abmischung mit beliebigen weiteren lösemittelfreien aliphatischen und/oder cycloaliphatischen Di- und/oder Polyisocyanaten einzusetzen, wie z. B. Hexamethylendiisocyanat (HDI), 1-Isocyanato-3,3,5-trimethyl-5-isocyanatomethylcyclohexan (Isophorondiisocyanat, IPDI), 1,3-Diisocyanato-2(4)-methylcyclohexan, 4,4'- und/oder 4,2'-Diisocyanatodicyclohexylmethan, den bekannten Lackpolyisocyanaten mit Uretdion-, Isocyanurat-, Allophanat-, Biuret-, Iminooxadiazindion- und/oder Oxadiazintrionstruktur auf Basis dieser Diisocyanate, wie sie beispielsweise in J. Prakt. Chem. 336 (1994) 185 - 200 und EP-A 0 798 299 beispielhaft beschrieben sind, den aus EP-A 0 693 512 und EP-A 1 484 350 bekannten Lösungen cycloaliphatischer Polyisocyanate in niedrigviskosen HDI-Polyisocyanaten, den in EP-A 0 047 452 und EP-B 0 478 990 beschriebenen, durch Dimerisierung und/oder Trimerisierung aus Gemischen von HDI und Isophorondiisocyanat (IPDI) erhältlichen lösemittelfreien Polyisocyanaten oder auch Polyester-modifizierten HDI-Polyisocyanaten, der aus EP-A 0 336 205 bekannten Art.

Unabhängig von der Art der gewählten Ausgangsstoffe erfolgt beim erfindungsgemäßen Verfahren die Umsetzung der Polyisocyanatgemische A) mit den gegenüber Isocyanatgruppen reaktiven Komponenten B) unter Einhaltung eines Äquivalentverhältnisses von Isocyanatgruppen zu gegenüber Isocyanaten reaktiven Gruppen von 0,5 : 1 bis 2,0 : 1, vorzugsweise von 0,7 : 1 bis 1,3 : 1, besonders bevorzugt von 0,8 : 1 bis 1,2 : 1.

Neben den genannten Ausgangskomponeten A) und B) können dabei gegebenenfalls weitere Hilfs- und Zusatzmittel C), wie z. B. Katalysatoren, Treibmittel, oberflächenaktive Mittel, UV-Stabilisatoren, Schaumstabilisatoren, Antioxidantien, Formtrennmittel, Füllstoffe und Pigmente, mitverwendet werden.

Zur Reaktionsbeschleunigung können beispielsweise übliche aus der Polyurethanchemie bekannte Katalysatoren zum Einsatz kommen. Beispielhaft seien hier genannt tert. Amine, wie z. B. Triethylamin, Tributylamin, Dimethylbenzylamin, Diethylbenzylamin, Pyridin, Methylpyridin, Dicyclohexylmethylamin, Dimethylcyclohexylamin, N,N,N',N'-Tetramethyldiaminodiethylether, Bis-(dimethylaminopropyl)-harnstoff, N-Methyl- bzw. N-Ethylmorpholin, N-Cocomorpholin, N-Cyclohexylmorpholin, N,N,N',N'-Tetramethylethylendiamin, N,N,N',N'-Tetramethy-1,3-butandi-amin, N,N,N',N'-Tetramethyl-1,6-hexandiamin, Pentamethyldiethylentriamin, N-Methylpiperidin, N-Dimethylaminoethylpiperidin, N,N'-Dimethylpiperazin, N-Methyl-N'-dimethylaminopiperazin, 1,8-Diazabicyclo(5.4.0)undecen-7 (DBU), 1,2-Dimethylimidazol, 2-Methylimidazol, N,N-Di-methylimidazol-β-phenylethylamin, 1,4-Diazabicyclo-(2,2,2)-octan, Bis-(N,N-dimethylamino-ethyl)adipat; Alkanolaminverbindungen, wie z. B. Triethanolamin, Triisopropanolamin, N-Methylu n d N-Ethyl-diethanolamin, Dimethylaminoethanol, 2-(N,N-Dimethylaminoethoxy)ethanol, N,N',N"-Tris-(dialkylaminoalkyl)hexahydrotriazine, z.B. N, N',N"-Tris-(dimethylaminopropyl)-s-hexahydrotriazin und/oder Bis(dimethylaminoethyl)ether; Metallsalze, wie z. B. anorganische und/oder organische Verbindungen des Eisens, Bleis, Wismuths, Zinks, und/oder Zinns in üblichen Oxidationsstufen des Metalls, beispielsweise Eisen(II)-chlorid, Eisen(III)-chlorid, Wismut(III)-Wismut(III)-2-ethylhexanoat, Wismut(III)-octoat, Wismut(III)-neodecanoat, Zinkchlorid, Zink-2-ethylcaproat, Zinn(II)-octoat, Zinn(II)-ethylcaproat, Zinn(II)-palmitat, Dibutylzinn(IV)-dilaurat (DBTL), Dibutylzinn(IV)-dichlorid oder Bleioctoat; Amidine, wie z. B. 2,3-Dimethyl-3,4,5,6-tetra-hydropyrimidin; Tetraalkylammoniumhydroxide, wie z. B. Tetramethylammoniumhydroxid; Alkalihydroxide, wie z. B. Natriumhydroxid und Alkalialkoholate, wie z. B. Natriummethylat und Kaliumisopropylat, sowie Alkalisalze von langkettigen Fettsäuren mit 10 bis 20 C-Atomen und gegebenenfalls seitenständigen OH-Gruppen.

Bevorzugte einzusetzende Katalysatoren C) sind tertiäre Amine Bismuth- und Zinnverbindungen der genannten Art.

Die beispielhaft genannten Katalysatoren können bei der Herstellung der erfindungsgemäßen lichtechten Polyurethan-, Polythiourethan- und/oder Polyharnstoffmassen einzeln oder in Form beliebiger Mischungen untereinander eingesetzt werden und kommen dabei gegebenenfalls in Mengen von 0,01 bis 5,0 Gew.-%, bevorzugt 0,1 bis 2 Gew.-%, berechnet als Gesamtmenge an eingesetzten Katalysatoren bezogen auf die Gesamtmenge der verwendeten Ausgangsverbindungen, zum Einsatz.

Nach dem erfindungsgemäßen Verfahren werden vorzugsweise transparente kompakte Formteile mit hohem Brechungsindex hergestellt. Durch Zusatz geeigneter Treibmittel lassen sich, wenn gewünscht, aber auch geschäumte Formkörper erhalten. Hierfür geeignete Treibmittel sind beispielsweise leicht flüchtige organische Substanzen, wie z.B. Aceton, Ethylacetat, halogensubstituierte Alkane, wie Methylenchlorid, Chloroform, Ethylidenchlorid, Vinylidenchlorid, Monofluortrichlormethan, Chlortrifluormethan oder Dichlordifluormethan, Butan, Hexan, Heptan oder Diethylether und/oder gelöste inerte Gase, wie z.B. Stickstoff, Luft oder Kohlendioxid.

Als chemische Treibmittel C), d. h. Treibmittel die aufgrund einer Reaktion, beispielsweise mit Isocyanatgruppen, gasförmige Produkte bilden, kommen beispielsweise Wasser, Hydratwasser enthaltende Verbindungen, Carbonsäuren, tert.-Alkohole, z. B. t-Butanol, Carbamate, beispielsweise die in der EP-A 1 000 955, insbesondere auf den Seiten 2, Zeilen 5 bis 31 sowie Seite 3, Zeilen 21 bis 42 beschriebenen Carbamate, Carbonate, z. B. Ammoniumcarbonat und/oder Ammoniumhydrogencarbonat und/oder Guanidincarbamat in Betracht. Eine Treibwirkung kann auch durch Zusatz von bei Temperaturen über Raumtemperatur unter Abspaltung von Gasen, beispielsweise von Stickstoff, sich zersetzenden Verbindungen, z. B. Azoverbindungen wie Azodicarbonamid oder Azoisobuttersäurenitril, erzielt werden. Weitere Beispiele für Treibmittel sowie Einzelheiten über die Verwendung von Treibmitteln sind im Kunststoff-Handbuch, Band VII, herausgegeben von Vieweg und Höchtlen, Carl-Hanser-Verlag, München 1966, z.B. auf den Seiten 108 und 109, 453 bis 455 und 507 bis 510 beschrieben.

Eine Treibwirkung kann auch durch Zusatz von bei Temperaturen über Raumtemperatur unter Abspaltung von Gasen, beispielsweise von Stickstoff, sich zersetzenden Verbindungen, z. B. Azoverbindungen wie Azodicarbonamid oder Azoisobuttersäurenitril, erzielt werden. Weitere Beispiele für Treibmittel sowie Einzelheiten über die Verwendung von Treibmitteln sind im Kunststoff-Handbuch, Band VII, herausgegeben von Vieweg und Höchtlen, Carl-Hanser-Verlag, München 1966, z.B. auf den Seiten 108 und 109, 453 bis 455 und 507 bis 510 beschrieben.

Erfindungsgemäß können auch oberflächenaktive Zusatzstoffe C) als Emulgatoren und Schaumstabilisatoren mitverwendet werden. Geeignete Emulgatoren sind beispielsweise die Natriumsalze von Ricinusölsulfonaten oder Fettsäuren, Salze von Fettsäuren mit Aminen, wie z. B. ölsaures Diethylamin oder stearinsaures Diethanolamin. Auch Alkali- oder Ammoniumsalze von Sulfonsäuren, wie z. B. von Dodecylbenzolsulfonsäuren, Fettsäuren, wie z. B. Ricinolsäure, oder polymeren Fettsäuren, oder ethoxyliertes Nonylphenol können als oberflächenaktive Zusatzstoffe mitverwendet werden.

Geeignete Schaumstabilisatoren sind insbesondere die bekannten, vorzugsweise wasserlöslichen Polyethersiloxane, wie sie beispielsweise US-A 2 834 748, DE-A 1 012 602 und DE-A 1 719 238 beschrieben sind. Auch die gemäß DE-A 2 558 523 erhältlichen über Allophanatgruppen verzweigte Polysiloxan-Polyoxyalkylen-Copolymere stellen geeignete Schaumstabilisatoren dar.

Die vorstehend genannten, beim erfindungsgemäßen Verfahren gegebenenfalls mitzuverwendenden Emulgatoren und Stabilisatoren können sowohl einzeln als auch in beliebigen Kombinationen untereinander zum Einsatz kommen.

Die aus den erfindungsgemäß herstellbaren bzw. verwendbaren Polyurethanmassen erhaltenen Körper zeichnen sich bereits als solche, d. h. ohne Zusatz entsprechender Stabilisatoren, durch eine sehr gute Lichtbeständigkeit aus. Dennoch können bei ihrer Herstellung gegebenenfalls UV-Schutzmittel (Lichtstabilisatoren) oder Antioxidantien der bekannten Art als weitere Hilfs- und Zusatzmittel C) mitverwendet werden.

Geeignete UV-Stabilisatoren C) sind beispielsweise Piperidinderivate, wie z. B. 4-Benzoyloxy-2,2,6,6-tetramethylpiperidin, 4-Benzoyloxy-1,2,2,6,6-pentamethylpiperidin, Bis-(2,2,6,6-tetramethyl-4-piperidyl)sebacat, Bis(1,2,2,6,6-pentamethyl-4-piperidyl)sebacat, Methyl(1,2,2,6,6-pentamethyl-4-piperidyl)sebacat, Bis-(2,2,6,6-tetramethyl-4-piperidyl)-suberat oder Bis-(2,2,6,6-tetramethyl-4-piperidyl)-dodecandioat, Benzophenonderivate, wie z. B. 2,4-Dihydroxy-, 2-Hydroxy-4-methoxy-, 2-Hydroxy-4-octoxy-, 2-Hydroxy-4-dodecyloxy- oder 2,2'-Dihydroxy-4-dodecyloxy-benzophenon, Benztriazolderivate, wie z. B . 2-(5-Methyl-2-hydroxyphenyl)-benztriazol, 2-(5-tert.-Butyl-2-hydroxyphenyl)benztriazol, 2-(5-tert.-Octyl-2-hydroxyphenyl)-benztriazol, 2-(5-Dodecyl-2-hydroxyphenyl)benztriazol, 2-(3,5-Di-tert.-butyl-2-hydroxyphenyl)-5-chlorbenztriazol, 2-(3,5-Di-tert.-amyl-2-hydroxyphenyl)benztriazol, 2-(3,5-Di-tert.-butyl-2-hydroxyphenyl)benztriazol, 2-(3-tert.-Butyl-5-methyl-2-hydroxyphenyl)-5-chlorbenztriazol und Veresterungsprodukte von 2-(3-tert.-Butyl-5-propionsäure-2-hydroxyphenyl)benztriazol mit Polyethylenglykol 300, Oxalanilide, wie z. B. 2-Ethyl-2'-ethoxy- oder 4-Methyl-4'-methoxyoxalanilid, Salicylsäureester, wie z. B. Salicylsäurephenylester, Salicylsäure-4-tert.-butylphenylester und Salicylsäure-4-tert.-octylphenylester, Zimtsäureesterderivate, wie z. B. α-Cyano-β-methyl-4-methoxyzimtsäuremethylester, α-Cyano-β-methyl-4-methoxyzimtsäurebutylester, α-Cyano-β-phenylzimtsäureethylester und α-Cyano-β-phenylzimtsäureisooctylester, oder Malonesterderivate, wie z. B. 4-Methoxy-benzylidenmalonsäuredimethylester, 4-Methoxybenzylidenmalonsäurediethylester und 4-Butoxy-benzylidenmalonsäuredimethylester. Diese Lichtstabilisatoren können sowohl einzeln als auch in beliebigen Kombinationen untereinander zum Einsatz kommen. Geeignete Antioxidantien C) sind beispielsweise die bekannten sterisch gehinderten Phenole, wie z. B. 2,6-Di-tert-butyl-4-methylphenol (Ionol), Pentaerythrit-tetrakis(3-(3,5-di-tert-butyl-4-hydroxyphenyl)propionat), Octadecyl-3-(3,5-di-tert-butyl-4-hydroxyphenyl)-propionat, Triethylenglykol-bis(3-tert-butyl-4-hydroxy-5-methylphenyl)propionat, 2,2'-Thio-bis(4-methyl-6-tert-butylphenol), 2,2'-Thiodiethyl-bis[3-(3,5-di-tert-butyl-4-hydroxyphenyl)propionat), die sowohl einzeln als auch in beliebigen Kombinationen untereinander zum Einsatz kommen.

Weitere, gegebenenfalls mitzuverwendende Hilfs- und Zusatzmittel C) sind beispielsweise Zellregler der an sich bekannten Art, wie z. B. Paraffine oder Fettalkohole, die bekannten Flammschutzmittel, wie z.B. Tris-chlorethylphosphat, Ammoniumphosphat oder -polyphosphat, Füllstoffe, wie z. B. Bariumsulfat, Kieselgur, Russ, Schlämmkreide oder auch verstärkend wirkende Glasfasern. Schließlich können beim erfindungsgemäßen Verfahren gegebenenfalls auch die an sich bekannten inneren Formtrennmittel Farbstoffe, Pigmente, Hydrolyseschutzmittel, fungistatische und bakteriostatisch wirkende Substanzen mitverwendet werden.

Die genannte, gegebenenfalls mitzuverwendende Hilfs- und Zusatzmittel C) können sowohl der Polyisocyanatkompente A) und/oder der gegenüber Isocyanatgruppen reaktiven Komponente B) zugemischt werden.

Zur Herstellung der erfindungsgemäßen lichtechten Körper aus Polyurethanmassen werden die monomerenarmen Polyisocyanate A) mit der gegenüber Isocyanatgruppen reaktiven Komponente B), gegebenenfalls unter Mitverwendung der vorstehend genannten Hilfs- und Zusatzmittel C), in lösemittelfreier Form im oben angegebenen Äquivalentverhältnis von Isocyanatgruppen zu gegenüber Isocyanaten reaktiven Gruppen mit Hilfe geeigneter Mischaggregate gemischt und nach beliebigen Methoden, in offenen oder geschlossenen Formen, beispielsweise durch einfaches Vergießen von Hand, bevorzugt aber mit Hilfe geeigneter Maschinen, wie z. B. den in der Polyurethantechnologie üblichen Niederdruck- oder Hochdruckmaschinen oder nach dem RIM-Verfahren, in einem Temperaturbereich von 40 bis 180°C, vorzugsweise von 50 bis 140°C, besonders bevorzugt von 60 bis 120°C, und gegebenenfalls unter einem erhöhten Druck von bis zu 300 bar, vorzugsweise bis 100 bar, besonders bevorzugt bis zu 40 bar ausgehärtet.

Dabei werden die Polyisocyanate A) und gegebenenfalls auch die Ausgangskomponenten B) zur Verringerung der Viskositäten auf eine Temperatur von mindestens 40°C, vorzugsweise mindestens 50°C, besonders bevorzugt mindestens 60°C, vorgeheizt und gegebenenfalls durch Anlegen von Vakuum entgast.

In der Regel können die so aus den erfindungsgemäß hergestellten bzw. verwendbaren Polyurethanmassen gefertigten Körper nach kurzer Zeit, beispielsweise nach einer Zeit von 2 bis 60 min, entformt werden. Gegebenenfalls kann sich eine Nachhärtung bei einer Temperatur von 50 bis 100 °C, vorzugsweise bei 60 bis 90°C, anschließen.

Auf diese Weise erhält man kompakte oder geschäumte, licht- und wetterbeständige Polyurethankörper, die eine hohe Beständigkeit gegenüber Lösungsmitteln und Chemikalien sowie hervorragende mechanische Eigenschaften, insbesondere eine exzellente Wärmeformbeständigkeit auch bei höheren Temperaturen von beispielsweise 90°C, besitzen. Gegenüber den bisher bekannten Polyurethanen, die unter Verwendung ausschließlich monomerer araliphatischer Diisocyanate hergestellt wurden, härten die erfindungsgemäßen Polyurethanmassen mit deutlich geringerem Volumenschrumpf aus.

Bevorzugt finden die monomerenarmen araliphatischen Polyisocyanate A) zur Herstellung kompakter transparenter Formkörper Verwendung, die im Vergleich zu den ausschließlich auf monomeren araliphatischen Diisocyanaten basierenden Polyurethanen des Standes der Technik eine höhere Lichtbrechung zeigen. Diese transparenten Polyurethankörper eignen sich für eine Vielzahl unterschiedlicher Anwendungen, beispielsweise zur Herstellung von bzw. als Glasersatz-Scheiben, wie z. B. Sonnendächern, Front-, Heck- oder Seitenscheiben im Fahrzeug- oder Flugzeugbau, sowie als Sicherheitsglas.

Die erfindungsgemäßen Polyurethanmassen eignen sich darüber hinaus auch hervorragend zum transparenten Verguss optischer, elektronischer oder optoelektronischer Bauteile, wie z. B. von Solarmodulen, Leuchtdioden oder von Linsen oder Kollimatoren, wie sie beispielsweise als Vorsatzoptik in LED-Leuchten oder Automobilscheinwerfern zum Einsatz kommen.

Besonders bevorzugtes Einsatzgebiet für die aus den monomerenarmen araliphatischen Polyisocyanaten A) erhältlichen erfindungsgemäßen Polyurethanmassen ist aber die Herstellung leichtgewichtiger Kunststoff-Brillengläser mit hohem Brechungsindex und hoher Abbe-Zahl. Erfindungsgemäß hergestellte Brillengläser zeichnen sich durch hervorragende mechanische Eigenschaften, insbesondere Härte und Schlagfestigkeit sowie gute Kratzfestigkeit aus und sind darüber hinaus leicht zu bearbeiten und beliebig einfärbbar.

### Beispiele

Alle Prozentangaben beziehen sich, soweit nichts Anderslautendes vermerkt, auf das Gewicht.

Die Bestimmung der NCO-Gehalte erfolgte titrimetrisch nach DIN EN ISO 11909.

OH-Zahlen wurden titrimetrisch in Anlehnung an DIN 53240 T.2, Säure-Zahlen nach DIN 3682 bestimmt.

Die Monomeren Gehalte wurden nach DIN EN ISO 10283 gaschromatographisch mit internem Standard gemessen.

Sämtliche Viskositätsmessungen erfolgten mit einem Physica MCR 51 Rheometer der Fa. Anton Paar Germany GmbH (DE) nach DIN EN ISO 3219.

Die Glasübergangstemperatur Tg wurde mittels DSC (Differential Scanning Calorimetrie) mit einem Mettler DSC 12E (Mettler Toledo GmbH, Giessen, DE) bei einer Aufheizgeschwindigkeit von 20 °C/min bestimmt.

Shore-Härten wurden nach DIN 53505 mit Hilfe eines Shore-Härteprüfgerätes Zwick 3100 (Fa. Zwick, DE) gemessen.

Die Messung der Brechungsindices und Abbe-Zahlen erfolgte an einem Abbe-Refraktometer Modell B der Fa. Zeiss.

### Ausgangsverbindungen

### Polyisocyanat A1)

Zu einem Gemisch aus 2820 g (15 mol) 1,3-Bis(isocyanatomethyl)benzol (m-XDI) und 1,15 g (0,55 mol) Dibutylphosphat wurden unter Stickstoff und Rühren bei einer Temperatur von 80°C über einen Zeitraum von 5 Stunden 60,0 g (3,3 mol) Wasser kontinuierlich zudosiert. Kurze Zeit nach Beginn der Wasserzugabe setzte eine stetige CO₂-Entwicklung ein, die nach einer Nachrührzeit von 3 Stunden bei 90°C beendet war. Es lag eine farblose Lösung eines m-XDI-Biuretpolyisocyanates (40,8 Gew.-%) in überschüssigem monomerem Diisocyanat (59,2 Gew.-%) vor.

| | |
|---|---|
| NCO-Gehalt: | 30,0 % |
| Viskosität (23°C): | 340 mPas |
| Brechungsindex *n_{D}²⁰*: | 1,5737 |
| Dichte (23°C): | 1,236 g/cm⁻³ |

### Polyisocyanat A2)

940 g (5,0 mol) m-XDI wurden bei 70°C unter Stickstoff und Rühren innerhalb einer Stunde portionsweise mit 70 g (0,77 mol) 1,3-Butandiol versetzt und nach beendeter Zugabe eine weitere Stunde gerührt. Anschließend wurde das Reaktionsgemisch auf 95°C aufgeheizt und die Allophanatisierungsreaktion durch Zugabe von 0,3 g Zink(II)-2-ethyl-1-hexanoat gestartet. Nach einer Reaktionszeit von 10 Stunden bei 95°C war der NCO-Gehalt auf 28,5 % gefallen und der Katalysator wurde durch Zusatz von 0,25 g ortho-Phosphorsäure (85 %) und zweistündiges Rühren bei 90°C deaktiviert. Es lag eine farblose Lösung eines m-XDI-Allophanatpolyisocyanates (40,2 Gew.-%) in überschüssigem monomerem Diisocyanat (59,8 Gew.-%) vor.

| | |
|---|---|
| NCO-Gehalt: | 27,9 % |
| Viskosität (23°C): | 520 mPas |
| Brechungsindex *n_{D}²⁰*: | 1,5625 |
| Dichte (23°C): | 1,220 g/cm⁻³ |

### Polyisocyanat A3)

940 g (5,0 mol) m-XDI wurden bei 70°C unter Stickstoff und Rühren mit 9,4 g (0,09 mol) Benzylalkohol versetzt und anschließend auf 110°C aufgeheizt. Über einen Zeitraum von 4 Stunden wurden kontinuierlich 2,2 g einer 50 %igen Lösung von Zink(II)-2-ethyl-1-hexanoat in 2-Ethyl-1-hexanol als Trimeriserungskatalysator zugegeben. Das Reaktionsgemisch wurde zwei weitere Stunden bei 110°C gerührt, anschließend auf 90°C abgekühlt und die Trimerisierungsreaktion durch Zusatz von 0,4 g ortho-Phosphorsäure (85 %) und zweistündiges Nachrühren gestoppt. Es lag eine farblose Lösung eines Isocyanuratgruppen enthaltenden m-XDI-Polyisocyanates (41,4 Gew.-%) in überschüssigem monomerem Diisocyanat (58,6 Gew.-%) vor.

| | |
|---|---|
| NCO-Gehalt: | 30,0 % |
| Viskosität (23°C): | 670 mPas |
| Brechungsindex *n_{D}²⁰*: | 1,5765 |
| Dichte (23°C): | 1,242 g/cm⁻³ |

### Polyisocyanat A4)

940 g (5,0 mol) m-XDI wurden bei 60°C unter trockenem Stickstoff in einer Rührapparatur vorgelegt. Innerhalb von 20 Minuten wurden portionsweise 2,5 g einer 50 %-igen Lösung von Tetrabutylphosphoniumhydrogendifluorid in Isopropanol/Methanol (2:1) als Katalysator so zugegeben, dass die Innentemperatur 70°C nicht überstieg. Nach Erreichen eines NCO-Gehaltes von 35,0 % wurde die Reaktion durch Zugabe von 0,75 g Dibutylphosphat und einstündiges Nachrühren bei 70°C gestoppt. Es lag eine farblose Lösung eines Isocyanurat- und Iminoxadiazindiongruppen enthaltenden m-XDI-Polyisocyanates (46,6 Gew.-%) in überschüssigem monomerem Diisocyanat (53,4 Gew.-%) vor.

| | |
|---|---|
| NCO-Gehalt: | 34,4 % |
| Viskosität (23°C): | 50 mPas |
| Brechungsindex nD20: | 1,5651 |
| Dichte (23°C): | 1,236 g/cm⁻³ |

### Hydroxyfunktioneller Reaktionspartner B1)

Lösemittelfreies Polyesterpolyol, hergestellt wie in WO 2010/083958 unter Ausgangsverbindungen als hydroxyfunktioneller Reaktionspartner B1) beschrieben.

| | |
|---|---|
| Viskosität (23 °C): | 19900 mPas |
| OH-Zahl: | 628 mg KOH/g |
| Säurezahl: | 2,2 mg KOH/g |
| OH-Funktionalität: | 2,6 |
| Mittleres Molekulargewicht: | 243 g/mol (aus OH-Zahl berechnet) |

### Mercaptofunktioneller Reaktionspartner B2)

| | |
|---|---|
| Pentaerythrit-tetrakis(3-mercaptopropionat) (= THIOCURE^{®} PETMP, Fa. Bruno Bock, DE) | |
| Äquivalentgewicht: | 122,2 g/val SH |

Gegenüber den bisher bekannten Polyurethanen, die unter Verwendung ausschließlich monomerer araliphatischer Diisocyanate hergestellt wurden, härten die erfindungsgemäßen Polyurethanmassen

### Beispiele 1 bis 10 (Herstellung von Polyurethan-Vergussmassen)

Zur Herstellung von Vergussmassen wurden die Polyisocyanatgemische A) und die Polyolkomponenten B) auf 50°C vorgewärmt in den in Tabelle 1 angegebenen Kombinationen und Mengenverhältnissen (Gew.-Teile), jeweils entsprechend einem Äquivalentverhältnis von Isocyanatgruppen zu gegenüber Isocyanaten reaktiven Gruppen von 1 : 1, mit Hilfe eines Speed-Mixers DAC 150 FVZ (Firma Hauschild, DE) 1 Min bei 3500 U/Min homogenisiert und anschließend von Hand in offene, nicht beheizte Polypropylen-Formen gegossen. Zum Vergleich wurden auf analoge Weise entsprechende Vergussmassen unter Verwendung von monomerem m-XDI als Polyisocyanatkomponente hergestellt. Nach 24 Stunden Aushärtung bei 70°C in einem Trockenschrank wurden die Prüfkörper (Durchmesser 50 mm, Höhe 5 mm) entformt.

Nach einer Nachhärtezeit von weiteren 24 Stunden bei Raumtemperatur wurden die Prüfkörper auf ihre mechanischen und optischen Eigenschaften getestet. Die Prüfergebnisse finden sich ebenfalls in der nachfolgenden Tabelle 1.

**Tabelle 1**

| **Beispiel** | **1** (Vergleich) | **2** | **3** | **4** | **5** | **6** (Vergleich) | **7** | **8** | **9** | **10** |
|---|---|---|---|---|---|---|---|---|---|---|
| m-XDI | 27,9 | - | - | - | - | 43,5 | - | - | - | - |
| Polyisocyanatgemisch A1) | - | 36,1 | - | - | - | - | 52,9 | - | - | - |
| Polyisocyanatgemisch A2) | - | - | 38,3 | - | - | - | - | 55,3 | - | - |
| Polyisocyanatgemisch A3) | - | - | - | 36,6 | - | - | - | - | 53,4 | - |
| Polyisocyanatgemisch A4) | - | - | - | - | 33,4 | - | - | - | - | 50.0 |
| Reaktionspartner B1) | 72,1 | 63,9 | 61,7 | 63,4 | 66,6 | - | - | - | - | - |
| Reaktionspartner B2) 122 | - | - | - | - | - | 56,5 | 47,1 | 44,7 | 46,7 | 50,0 |
| Aussehen | Klar | Klar | Klar | Klar | Klar | Klar | Klar | Klar | Klar | Klar |
| Tg[°C] | 76 | 97 | 92 | 100 | 91 | 85 | 103 | 102 | 109 | 101 |
| Shore-Härte D | 81 | 85 | 86 | 86 | 89 | 78 | 87 | 85 | 83 | 89 |
| Dichte [g/cm⁻³] | 1,255 | 1,245 | 1,238 | 1,251 | 1,247 | 1,370 | 1,339 | 1,315 | 1,344 | 1,340 |
| Volumenschrumpf [%] | 9,2 | 6,8 | 6,5 | 7,0 | 7,3 | 9,9 | 6,5 | 5,4 | 6,6 | 6,5 |
| Brechungsindex *n_{D}²⁰* | 1,5551 | 1,5669 | 1,5613 | 1,5600 | 1,5626 | 1,5927 | 1,5969 | 1,5899 | 1,5964 | 1,5967 |
| Abbe-Zahl | 41 | 36 | 37 | 44 | 41 | 34 | 37 | 37 | 36 | 37 |

Der Vergleich zeigt, dass die erfindungsgemäß hergestellten Vergussmassen (Beispiele 2 bis 5 sowie 7 bis 10) unter deutlich geringerem Volumenschrumpf aushärten, als die unter Verwendung von ausschließlich monomerem m-XDI als Polyisocyanatkomponente hergestellten Massen (Vergleichsbeispiele 1 und 6) und dabei gleichzeitig zu höheren Brechungsindices sowie höheren Härten und Glasübergangstemperaturen führen.

## Patentansprüche

1. Verwendung lösemittelfreier Polyisocyanatkomponenten A), die zu 5 bis 95 Gew.-% aus Polyisocyanatmolekülen, aufgebaut aus mindestens zwei araliphatischen Diisocyanatmolekülen, und zu 95 bis 5 Gew.-% aus monomeren araliphatischen Diisocyanaten bestehen und einen Gehalt an Isocyanatgruppen von 18 bis 43 Gew.-% aufweisen, zur Herstellung lichtechter kompakter oder geschäumter Polyurethankörper.

2. Verwendung gemäß Anspruch 1, **dadurch gekennzeichnet, dass** die Polyisocyanatkomponenten A) Uretdion-, Isocyanurat-, Iminooxadiazindion-, Allophanat- und/oder Biuretstrukturen aufweisen.

3. Verwendung gemäß Anspruch 1 und 2, **dadurch gekennzeichnet, dass** es sich bei der Polyisocyanatkomponenten A) um Polyisocyanate auf Basis von 1,3-Bis(isocyanatomethyl)benzol, 1,4-Bis(isocyanatomethyl)benzol und/oder 1,3-Bis(2-isocyanatopropan-2-yl)benzol mit einem Gehalt an Isocyanatgruppen von 24 bis 35 Gew.% handelt.

4. Verwendung gemäß Anspruch 1 zur Herstellung kompakter transparenter Polyurethankörper.

5. Verwendung gemäß Anspruch 4, **dadurch gekennzeichnet, dass** es sich bei den Polyurethankörpern um Glasersatzteile handelt.

6. Verwendung gemäß Anspruch 4, **dadurch gekennzeichnet, dass** es sich bei den Polyurethankörpem um optische, optoelektronische oder elektronische Bauteile handelt.

7. Verwendung gemäß Anspruch 6, **dadurch gekennzeichnet, dass** es sich bei den Bauteilen um optische Linsen oder Brillengläser handelt.

8. Verwendung gemäß Anspruch 6, **dadurch gekennzeichnet, dass** es sich bei den Bauteilen um Leuchtdioden handelt.

9. Verfahren zur Herstellung lichtechter Polyurethanmassen durch lösemittelfreie Umsetzung von
A) Polyisocyanatgemischen, die zu 5 bis 95 Gew.-% aus Polyisocyanaten, aufgebaut aus mindestens zwei araliphatischen Diisocyanatmolekülen, und zu 95 bis 5 Gew.-% aus monomeren araliphatischen Diisocyanaten bestehen und einen Gehalt an Isocyanatgruppen von 18 bis 43 Gew.-% aufweisen,
mit
B) gegenüber Isocyanatgruppen reaktiven Reaktionspartnern einer mittleren Funktionalität von 2,0 bis 6,0 und gegebenenfalls unter Mitverwendung
C) weiterer Hilfs- und Zusatzmittel,
unter Einhaltung eines Äquivalentverhältnisses von Isocyanatgruppen zu gegenüber Isocyanaten reaktiven Gruppen von 0,5 : 1 bis 2,0 : 1.

10. Verfahren gemäß Anspruch 9, **dadurch gekennzeichnet, dass** als Komponente C) Katalysatoren, UV-Stabilisatoren, Antioxidantien und/oder Formtrennmittel eingesetzt werden.

11. Verfahren gemäß Anspruch 9, **dadurch gekennzeichnet, dass** die Umsetzung der Reaktionspartner in einem Temperaturbereich von 40°C bis 180°C und einem Druck von bis zu 300 bar durchgeführt wird.

## Claims

1. Use of solvent-free polyisocyanate components A) which comprise, to the extent of 5 to 95 wt.%, polyisocyanate molecules built up from at least two araliphatic diisocyanate molecules and, to the extent of 95 to 5 wt.%, monomeric araliphatic diisocyanates and have a content of isocyanate groups of from 18 to 43 wt.% for the production of light-fast compact or foamed polyurethane bodies.

2. Use according to claim 1, **characterized in that** the polyisocyanate components A) have uretdione, isocyanurate, iminooxadiazinedione, allophanate and/or biuret structures.

3. Use according to claim 1 and 2, **characterized in that** the polyisocyanate components A) are polyisocyanates based on 1,3-bis(isocyanatomethyl)benzene, 1,4-bis(isocyanatomethyl)benzene and/or 1,3-bis(2-isocyanatopropan-2-yl)benzene with a content of isocyanate groups of from 24 to 35 wt.%.

4. Use according to claim 1 for the production of compact transparent polyurethane bodies.

5. Use according to claim 4, **characterized in that** the polyurethane bodies are glass substitute parts.

6. Use according to claim 4, **characterized in that** the polyurethane bodies are optical, optoelectronic or electronic components.

7. Use according to claim 6, **characterized in that** the components are optical lenses or spectacle lenses.

8. Use according to claim 6, **characterized in that** the components are light-emitting diodes.

9. Process for the preparation of light-fast polyurethane compositions by solvent-free reaction of
A) polyisocyanate mixtures which comprise, to the extent of 5 to 95 wt.%, polyisocyanates built up from at least two araliphatic diisocyanate molecules and, to the extent of 95 to 5 wt.%, monomeric araliphatic diisocyanates and have a content of isocyanate groups of from 18 to 43 wt.%,
with
B) reaction partners which are reactive towards isocyanate groups and have an average functionality of from 2.0 to 6.0, and optionally co-using
C) further auxiliary substances and additives, maintaining an equivalent ratio of isocyanate groups to groups which are reactive towards isocyanates of from 0.5 : 1 to 2.0 : 1.

10. Process according to claim 9, **characterized in that** catalysts, UV stabilizers, antioxidants and/or mould release agents are employed as component C).

11. Process according to claim 9, **characterized in that** the reaction of the reaction partners is carried out in the temperature range from 40°C to 180 °C under a pressure of up to 300 bar.

## Revendications

1. Utilisation de composants de polyisocyanate A) exempts de solvants, qui sont constitués à raison de 5 à 95% en poids de molécules de polyisocyanate, formées à partir d'au moins deux molécules de diisocyanate araliphatiques et à raison de 95 à 5% en poids de diisocyanates monomères araliphatiques et qui présentent une teneur en groupes isocyanate de 18 à 43% en poids, pour la préparation de corps de polyuréthane compacts ou moussés, stables à la lumière.

2. Utilisation selon la revendication 1, **caractérisée en ce que** les composants de polyisocyanate A) présentent des structures d'uretdione, d'isocyanurate, d'iminooxadiazinedione, d'allophanate et/ou de biuret.

3. Utilisation selon la revendication 1 et 2, **caractérisée en ce qu'**il s'agit, pour les composants de polyisocyanate A), de polyisocyanates à base de 1,3-bis(isocyanatométhyl)benzène, de 1,4-bis(isocyanatométhyl)benzène et/ou de 1,3-bis(2-isocyanatopropan-2-yl)benzène présentant une teneur en groupes isocyanate de 24 à 35% en poids.

4. Utilisation selon la revendication 1 pour la fabrication de corps de polyuréthane transparents compacts.

5. Utilisation selon la revendication 4, **caractérisée en ce qu'**il s'agit, pour les corps de polyuréthane, de pièces de remplacement du verre.

6. Utilisation selon la revendication 4, **caractérisée en ce qu'**il s'agit, pour les corps de polyuréthane, d'éléments optiques, optoélectroniques ou électroniques.

7. Utilisation selon la revendication 6, **caractérisée en ce qu'**il s'agit, pour les éléments, de lentilles optiques ou de verres de lunettes.

8. Utilisation selon la revendication 6, **caractérisée en ce qu'**il s'agit, pour les éléments, de diodes électroluminescentes.

9. Procédé pour la fabrication de masses de polyuréthane stables à la lumière par transformation, exempte de solvant, de
A) mélanges de polyisocyanates, qui sont constitués à raison de 5 à 95% en poids de polyisocyanates, formés à partir d'au moins deux molécules de diisocyanate araliphatiques et à raison de 95 à 5% en poids de diisocyanates monomères araliphatiques et qui présentent une teneur en groupes isocyanate de 18 à 43% en poids, avec
B) des partenaires de réaction réactifs par rapport aux groupes isocyanate présentant une fonctionnalité moyenne de 2,0 à 6,0 et le cas échéant en utilisant conjointement
C) d'autres adjuvants et additifs, en respectant un rapport d'équivalents de groupes isocyanate aux groupes réactifs par rapport aux isocyanates de 0,5:1 à 2,0:1,

10. Procédé selon la revendication 9, **caractérisé en ce qu'**on utilise, comme composant C), des catalyseurs, des stabilisants aux UV, des antioxydants et/ou des agents de démoulage.

11. Procédé selon la revendication 9, **caractérisé en ce que** la transformation des partenaires de réaction est réalisée dans une plage de température de 40°C à 180°C et à une pression de jusqu'à 300 bars.
